# EUROPÄISCHE PATENTANMELDUNG

(11) **EP 1 389 652 A2**
(43) Veröffentlichungstag der Anmeldung: **18.02.2004**
(21) Anmeldenummer: 03018436.0
(22) Anmeldetag: 14.08.2003
(51) Int. Cl.: E02B 1/00, E02B 8/02, E02B 8/08, A01K 79/00

(54) **Vorrichtung zum Umleiten von Lebewesen und Gegenständen aus einer kanalisierten Wasserströmung**

(30) Priorität: 16.08.2002 DE 10237511
(71) Anmelder: Itasse, Jean-Jacques, 71263 Weil der Stadt (DE)
(72) Erfinder: Itasse, Jean-Jacques, 71263 Weil der Stadt (DE)

(57) **Zusammenfassung**

Vorrichtung zum Umleiten von Lebewesen und Gegenständen aus einer kanalisierten Wasserströmung mit Kanalbegrenzungen, umfassend eine Bypassleitung zur Aufnahme eines Teils der Wasserströmung. Aufgabe ist es, eine selbstreinigende Vorrichtung vorzuschlagen, welche ohne Energiezufuhr auskommt. Die Aufgabe wird mit einer Vorrichtung, umfassend mindestens ein Endlosförderband mit jeweils mindestens zwei endseitigen Umlenkrollen gelöst, wobei die Förderbänder von der Wasserströmung durchströmbar sind, dabei quer, aber nicht senkrecht zur Wasserströmung so angeordnet ist, dass sie mit den Kanalbegrenzungen eine trichterförmige Struktur mit der Bypassleitung als Ausfluss bildet, sowie die Endlosförderbänder zwischen den Umlenkrollen Bewegungsrichtungen aufweisen, welche nicht senkrecht zur Wasserströmung verläuft.

## Beschreibung

Die Erfindung betrifft eine Vorrichtung zum Umleiten von Lebewesen und Gegenständen aus einer kanalisierten Wasserströmung des ersten Patentanspruchs.

Es ist bekannt, dass Lebewesen und Gegenstände in einer kanalisierten Wasserströmung grundsätzlich als eine Störgröße anzusehen sind, wenn die Wasserströmung beispielsweise für eine Kühlung durch einen Wärmetauscher oder für eine Energiegewinnung über eine Turbine geleitet wird, wobei es zu einer Aufteilung oder zu Verwirbelungen der Wasserströmung kommt. Erreichen die Lebewesen oder die Gegenstände eine bestimmte Größe, kommt es meist zu einer Störung beispielsweise in Form einer spontanen oder allmählichen Verstopfung oder einer mehr oder weniger starken Beschädigung des durchströmten Aggregats, wie z.B. des Wärmetauschers oder der Turbine.

Es ist auch bekannt, dass kanalisierte Leitungen zur Entnahme von Wasser grundsätzlich als eine Störgröße in der Natur betrachtet werden und es ist außerordentlich wichtig, das insbesondere Fische und andere Lebewesen weder in den Turbinen oder Wärmetauscher noch vorher an einen Rechen, Netz oder Gitter oder deren Reinigungsvorrichtungen zum Schaden oder zum Tode kommen.

Zur Vermeidung derartiger Störungen ist es auch bekannt, stromaufwärts vor dem durchströmten Aggregat Vorrichtungen zum Abfangen von Lebewesen und Gegenständen vorzusehen, wobei diese der Wasserströmung entnommen werden. Die entnommenen Lebewesen und Gegenstände werden in der Regel durch die Vorrichtung in eine Bypassleitung zur Umgehung des Aggregats umgeleitet.

Allgemein verbreitet sind eingangs genannte Vorrichtungen in Form von ein- oder mehrstufigen Gittern, Netzen oder Rechen. Sie weisen eine bestimmte Maschenweite auf und fangen dadurch Lebewesen und Gegenstände ab einer vorbestimmten Größe zuverlässig ab oder leiten sie in eine Bypassleitung um. Sie sind so angeordnet, dass die gesamten Querschnitt der Wasserströmung überdecken.

In offenen Gewässern kommen derartige Vorrichtungen zum Schutz von Wehranlagen, Kühlwasserableitungen oder für Wasserkraftanlagen in der Form eines ein- oder mehrstufigen Rechens zum Einsatz. Dabei fängt meist ein stromaufwärts vorgeschalteter Grobrechen bereits größere Gegenstände ab, welche allein von der Masse einen Rechen beschädigen könnten.

Gitter, Netze oder Rechen sind Systeme ohne bewegliche Teile, welche sich in mehr oder weniger kurzer Zeit zusetzen und daher regelmäßig in relativ kurzen Abständen zu reinigen sind.

Abhilfe bieten motorisch angetriebene Vorrichtungen mit Komponenten zur automatisierten Abreinigung.

In der DE 198 22 853 A1 ist eine derartige Vorrichtung zum Umleiten von Lebewesen und Gegenständen aus einer offenen kanalisierten Wasserströmung bekannt. Dabei ist anstelle eines Rechens ein angetriebenes Endlosförderband aus einem durchströmbaren Material quer zur Wasserströmung eingesetzt. Dabei ist eine stromabwärts angeordnete obere Umlenkrolle für das Endlosförderband zumindest teilweise oberhalb der Wasseroberfläche angeordnet. Die auf dem Endlosförderband auftreffenden Lebewesen und Gegenstände werden somit auf dem Endlosförderband über diese obere Umlenkrolle zunächst aus der Wasserströmung gehoben und anschließend in eine Auffangvorrichtung, welche die Funktion einer Bypassleitung übernimmt, weitergeleitet. Die auf diese Weise abgefangenen Lebewesen oder Gegenstände werden also durch das motorisch angetriebene Endlosförderband laufend weitergeleitet, womit sich die Gefahr eines möglichen Zusetzens der Vorrichtung deutlich reduziert.

Eine derartige Vorrichtung setzt jedoch eine ständige Energiezufuhr zum Antrieb des Endlosförderbandes voraus. Im Betrieb werden die Lebewesen und die Gegenstände vollständig der Wasserströmung entnommen, was erfahrungsgemäß die Akzeptanzbereitschaft möglicherweise betroffener Angler, Fischer oder auch Behörden und Umweltverbänden begrenzt. Ferner gelten insbesondere Gegenstände, welche einem Gewässer entnommen werden, juristisch oft als zu entsorgende Abfälle, welche nicht einfach wieder der Wasserströmung zugeführt werden dürfen.

Ausgehend davon liegt der Erfindung die Aufgabe zugrunde, eine Vorrichtung zum Umleiten von Lebewesen und Gegenständen aus einer kanalisierten Wasserströmung vorzuschlagen, welche ohne ständige Energiezufuhr auskommt und auch die anderen umrissenen Nachteile nicht aufweist.

Die Aufgabe wird durch die Merkmale von Anspruch 1 gelöst. Vorteilhafte Ausgestaltungen werden in den Unteransprüchen wiedergegeben.

Wesentliches Merkmal der Erfindung ist das mindestens eine Endlosförderband, jeweils mit mindestens zwei Rollen, wobei jedes Förderband von der Wasserströmung durchströmbar ist. Dabei ist jedes Endlosförderband ähnlich wie Transportförderbänder auf zwei endseitigen Umlenkrollen gespannt und weist ggf. eine oder mehrere Stützrollen, bei Bedarf auch eine oder mehrere Zwischenumlenkrollen auf. Es ist quer, aber nicht senkrecht zur Wasserströmung so angeordnet, sodass die Summe aller Förderbänder gemeinsam mit einer oder mehrerer Kanalbegrenzungen eine trichterförmige Struktur bilden, welche einen Ausfluss aufweist, welcher in Strömungsrichtung in eine Bypassleitung einmündet. Dabei zweigt die Bypassleitung einen Teil der Wasserströmung ab.

Anders betrachtet besteht im Gegensatz zu dem zuletzt genannten Stand der Technik zwischen Wasserströmung und Bypassleitung über die trichterförmige Struktur eine direkte Strömungsverbindung ohne Hindernisse oder Unterbrechungen.

Das Endlosförderband stellt somit eine Begrenzung dieser trichterförmigen Struktur dar, und muss von dem nicht durch die Bypassleitung geleiteten größeren Anteil der Wasserströmung durchdrungen werden. Dabei überträgen die Wasserströmung und die auf die Endlosförderbänder auftreffenden Lebewesen und Gegenstände auf die Endlosförderbänder je eine Kraft. Da die Endlosförderbänder nicht senkrecht zur Wasserströmung angeordnet sind und zwischen den Umlenkrollen Bewegungsrichtungen aufweisen, welche nicht senkrecht zur Wasserströmung verlaufen, treibt diese Kraft in besonders vorteilhafter Weise die Endlosförderbänder auf ihren Rollen an. Ein separater motorischer Antrieb und eine Steuer- und Regelungseinrichtung für das Endlosförderband mit oder ohne eine eigene Energiezufuhr ist dabei nicht mehr erforderlich. Besonders effizient ist die Ausnutzung der Kraft für den Antrieb der Endlosförderbänder dann, wenn die beiden endseitigen Umlenkrollen der Endlosförderbänder senkrecht zur Wasserströmung angeordnet sind.

Das stetige Umlaufen des Endlosförderbandes in der Wasserströmung bewirkt zudem in vorteilhafter Weise ein ständiges Abreinigen des Endlosförderbandes. Dabei stellt sich dieser Selbstreinigungsvorgang bei einer gewissen Verschmutzung von alleine ein und nach einer bestimmten Reinigung aus. Dabei werden Lebewesen und Gegenstände, welche von der Wasserströmung auf das Endlosförderband gedrückt werden, zum überwiegenden Teil an der stromabwärts gelegenen endseitigen Umlenkrolle von der Wasserströmung mitgenommen. Zusätzliche Reinigungsvorrichtungen könnten Gegenstromdüsen, welche das Endlosförderband gezielt durch Druckstöße in Gegenstromrichtung durchströmen, oder auch Bürstensysteme umfassen.

Ein weiterer Vorteil dieser Vorrichtung liegt darin, dass die von den Endlosförderbändern abgefangenen Lebewesen und Gegenstände durch die Wasserströmung über die trichterförmige Struktur in die Bypassleitung umgeleitet werden, ohne dass sie dabei aus der Wasserströmung entnommen werden.

Ein besonders zuverlässiges Umleiten von Lebewesen und Gegenständen aus der Wasserströmung erhält man dann, wenn je eine der Umlenkrollen pro Endlosförderband im Bereich des Ausflusses zur Bypassleitung angeordnet ist, wobei das Endlosförderband in diesem Bereich zwischen der Umlenkrolle und einem Abstreifer hindurchgeführt wird.

Um zu vermeiden, dass Lebewesen oder Gegenstände in der Wasserströmung ein Endlosförderband umgehen, ist es sinnvoll, Strömungsbarrieren in der Form von Vorsprüngen an den Kanalbegrenzungen vorzusehen. Sie bilden gemeinsam mit den Rändern der Endlosförderbänder ein Labyrinthdichtungssystem, welches sich aus Vorsprüngen an den Kanalbegrenzungen parallel zu dem Endlosförderband zusammensetzt. Dabei weisen diese Labyrinthdichtungssysteme Spaltbreiten auf, welche an die Maschenweite des für die Wasserströmung durchlässigen Endlosförderbandes anpassbar sind. Vorsprungseitige Bürsten, welche auf das Endlosförderband wirken, dienen dabei als zusätzlicher Schutz gegen ein vorschnelles Zusetzen der Labyrinthdichtungssysteme und wirken damit gegen ein Blockieren des Endlosförderbandes. Als Vorsprung eignet sich vorzugsweise je eine dem Endlosförderband entgegen der Wasserströmung vorgeschaltete Leiste, Blechstreifen oder Winkelblech, wobei diese die Randbereiche des Endlosförderbandes überdecken.

Eine zuvor genannte Strömungsbarriere kann natürlich auch auf der stromabwärts gerichteten Seite des Endlosförderbandes angeordnet werden. Dies ist vor allem dann sinnvoll, wenn ein Endlosförderband von einer zeitweise oder permanenten besonders starken Wasserströmung durchdrungen wird und dabei durch diese unzulässig stark bauchig gekrümmt wird. Die Strömungsbarriere würde dann eine stützende Wirkung auf das Endlosförderband ausüben. Ein stromaufwärts angeordneter Vorsprung würde dagegen als Teil einer Labyrinthdichtung versagen.

Für eine effiziente Nutzung der Wasserströmung für eine Kühlung oder zur Energieerzeugung durch ein der Vorrichtung nachgeschaltetes Aggregat ist es grundsätzlich sinnvoll, den durch die Bypassleitung abgezweigten und ungenutzt an dem Aggregat vorbeigeführten Teil der Wasserströmung zu regulieren. Durch eine Durchflussregulierungseinrichtung, beispielsweise ein Schiebeventil, in der Bypassleitung ist der in dieser transportierte Teilstrom je nach erforderlicher Transportleistung an Lebewesen und Gegenständen optimal einstellbar. Das mengenmäßige Auftreten an umzuleitenden Lebewesen und Gegenständen lässt sich beispielsweise optisch oder akustisch oder nach den bekannten Wanderzeiten der Fischpopulationen mit geeigneten Aufnehmern in der Wasserströmung vor oder über eine Druckdifferenzmessung vor und hinter einem Endlosförderband erfassen.

Um ein ständiges Abreinigen des Endlosförderbandes auch in einer stark schwankenden Wasserströmung, welche auch längere Abschnitte mit sehr schwacher Wasserströmung umfasst, sicherzustellen, bietet sich ein zusätzlicher motorischer Antrieb zum Antreiben der Endlosförderbänder an. Dieser Antrieb ist für den Fall erforderlich, wenn sich das Endlosförderband allmählich zusetzt und die Wasserströmung allein für einen zuverlässigen Antrieb des Endlosförderbandes nicht ausreicht. Zur Regelung eines derartigen motorischen Antriebs bietet sich eine Steuerung mit angeschlossenen Druckmessvorrichtungen in der Wasserströmung vor und hinter den Förderbändern zur Ermittlung eines Differenzdruckes an. Zudem sollte die Steuerung auch Sensoren zur Erkennung einer Betriebsstörung wie z.B. einen Drehzahlmesser an einer Umlenkrolle je Endlosförderband, sowie eine Schaltung für eine Reaktion, wie z. B. eine Intervallschaltung für den motorischen Antrieb, auf diese Betriebsstörung umfassen. Eine mögliche extreme Reaktion ist eine Unterbrechung der Wasserströmung vor der Vorrichtung, realisierbar beispielsweise über eine Umleitung der gesamten Wasserströmung.

Die Erfindung wird anhand einer Ausführungsform mit Hilfe von Figuren dargestellt. Es zeigen
Fig. 1 eine schematische Schnittdarstellung der Ausführungsform in seitlicher Ansicht,
Fig. 2 eine schematische Schnittdarstellung der Ausführungsform in Strömungsrichtung, sowie
Fig. 3 eine schematische Draufsicht der Ausführungsform.

In allen drei Figuren ist eine Vorrichtung zum Umleiten von Lebewesen und Gegenständen gemäß der Ausführungsform in den drei Projektionsrichtungen dargestellt. Sie betrifft eine Vorrichtung, wie sie in einem offenen fließenden Gewässer zum Schutz einerseits eines nachgeschalteten Aggregats, beispielsweise eines Wasserkraftwerks, und andererseits der Lebewesen eingesetzt wird. Alle drei Figuren zeigen jedoch die Vorrichtung mit der kanalisierten Wasserströmung 1 mit dem Kanalboden 2, die Kanalseitenwände 3 und die Wasseroberfläche 8 als Kanalbegrenzungen sowie die Bypassleitung 4, jedoch nicht das nachgeschaltete Aggregat und ein ggf. vorgeschalteter Grobrechen zum Abfangen größerer Gegenstände in der Wasserströmung, wie z.B. größere Äste, Wasserfahrzeuge oder Baumstämme. Ferner sind in den Figuren mit Pfeilen die Fließrichtungen der Wasserströmungen vor der Vorrichtung 5, nach der Vorrichtung 6 sowie in der Bypassleitung 7 angegeben.

Die eigentliche Vorrichtung zum Umleiten von Lebewesen und Gegenständen in der beschriebenen Ausführungsform besteht im wesentlichen, wie in allen Figuren offenbart, aus einer stromabwärts gelegenen oberen und einer stromaufwärts gelegenen unteren Umlenkrolle 9 und 10, auf die das Endlosförderband 11 aufgespannt ist. Die obere und untere Umlenkrolle 9 und 10 sind um je eine Drehachse 12 und 13 drehbar gelagert, wodurch sich das Endlosförderband 11 tangential um die Mantelflächen der Umlenkrollen bewegen lässt.

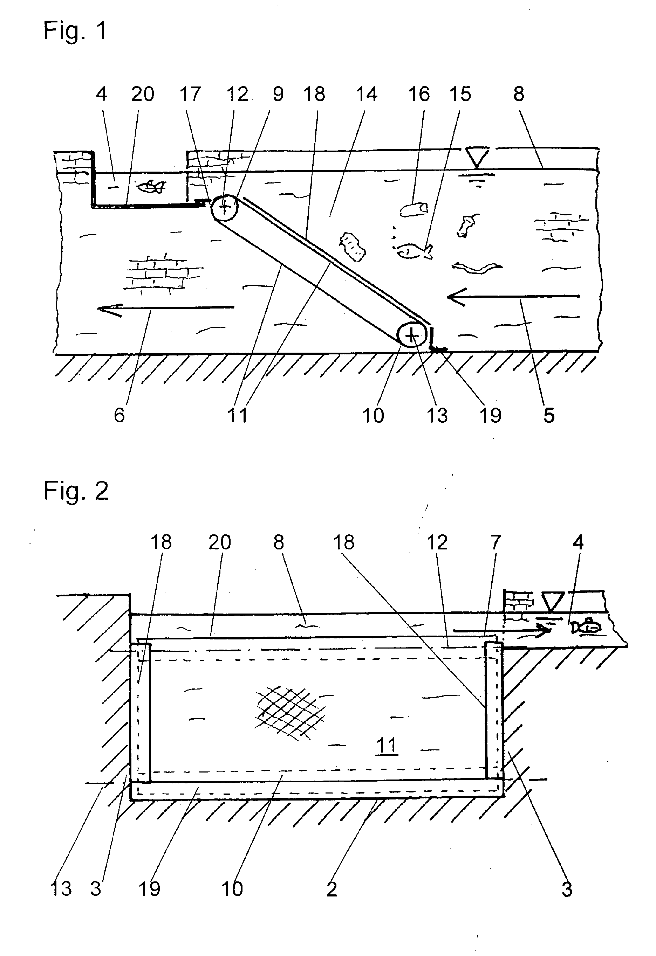

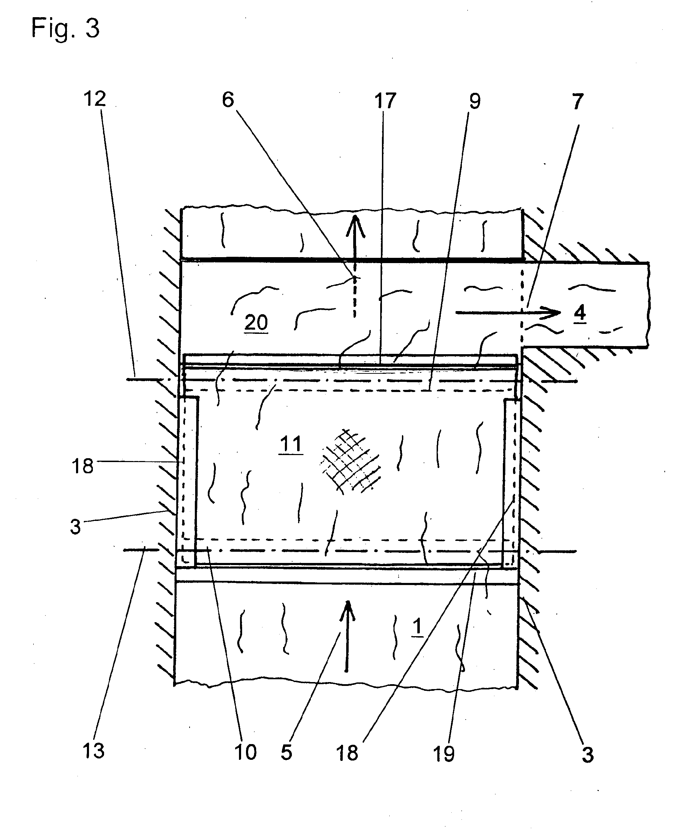

Das Endlosförderband 11 besteht, wie in Fig. 2 und 3 symbolisch angedeutet, aus einem wasserdurchlässigen Material, beispielsweise aus einem grobmaschigem Gewebeband oder einem Maschendraht. Bei der Auswahl des Materials ist jedoch auf eine ausreichende Dehnsteifigkeit zu achten, damit eine erforderliche Spannung im Endlosförderband sichergestellt werden kann. Dabei weist das Endlosförderband eine vorbestimmte unveränderliche Maschenweite auf, welche so gewählt wird, dass einerseits es nur einen möglichst geringen Durchströmungswiderstand für die Wasserströmung darstellt, andererseits aber eine zuverlässige Barriere für den bei weitem überwiegenden Mengenanteil an Lebewesen und Gegenständen, d.h. ab einer bestimmten Größe, darstellt, und die vor Ort vorhandenen Lebewesen im Wasser, insbesondere der Fischpopulation, zuverlässig schützt.

Figur 1 zeigt besonders deutlich die zuvor beschriebene trichterförmige Struktur 15 mit der Wasseroberfläche 8, den beiden Kanalseitenwänden 3 sowie dem Endlosförderband 11 als seitliche Begrenzungen und der Bypassleitung 4 als Ausfluss. Makroskopische Lebewesen, wie z.B. Fische 15, und Gegenstände 16, welche in der Wasserströmung stromabwärts treiben, werden von der Durchströmung der Wasseranteile durch das Endlosförderband an die obere Fläche des Endlosförderbandes angedrückt, wobei die Wasserströmung Lebewesen bzw. Gegenstand in Richtung Bypassleitung 4 drückt. Durch die Reibung oder Verhakung zwischen Lebewesen bzw. Gegenstand und Endlosförderband wird das Endlosförderband 11 dabei mitgezogen.

Die Bypassleitung zweigt bei der dargestellten Ausführungsform einen Teilstrom aus der Wasserströmung ab und erfasst dabei den Volumenbereich unmittelbar unter der gesamten Breite der Wasseroberfläche 8. Die Abzweigung der Bypassleitung 4 erfolgt praktisch über eine brückenähnliche, teilweise in das Gewässer eingetauchte und dabei einseitig entgegen der Wasserströmung offenen Wanne 20. Hierbei bietet es sich auch an, die Wanne für eine Durchflussmengenregulierung gemeinsam mit der oberen Umlenkrolle 9 mit einer motorischen Höhenverstellvorrichtung zu versehen. Alternativ ist eine mechanische Verstellung über einen Hebelmechanismus denkbar, der die Durchflussmenge in der Bypassleitung in Abhängigkeit vom Wasserstand, ggf. auch in Abhängigkeit der Strömungsgeschwindigkeit reguliert.

Die vorgenannte Durchflussregulierung in der Bypassleitung ist auch durch Klappen, Schieber oder anderen Vorrichtungen für eine Regulierung und Unterbrechung der Strömung in der Bypassleitung durchführbar.

An der oberen Umlenkrolle 9 ist ein blechförmiger Abstreifer 17 vorgesehen, unter dem das Endlosförderband 11 hindurchgezogen wird und an dem spätestens die größeren Gegenstände oder Lebewesen von dem Endlosförderband abgestreift werden.

Zur Vermeidung von abzweigenden Nebenströmungen aus der Wasserströmung, welche die Vorrichtung seitlich am Endlosförderband 11 umgehen, sind zwei Leisten 18 parallel zum Endlosförderband 11 an beiden Kanalseitenwänden 3 sowie ein Winkelblech 19 am Kanalboden 2 vor der unteren Umlenkrolle 10 angebracht. Das Winkelblech 19 behindert zudem ein Zusetzen der unteren Umlenkrolle 10, damit ein Blockieren der unteren Umlenkrolle und dadurch ein mögliches Versagen der Vorrichtung. Anstelle des Winkelblechs und der Leisten sind auch strömungsoptimierbare Profilleisten oder angepasste Vertiefungen in den entsprechenden Kanalbegrenzungen vorsehbar.

Die Bypassleitung ist anstelle der Wasseroberfläche auch an einer seitlichen Kanalseitenwand über deren gesamten Höhe abgreifbar. Die Umlenkrollen, das Endlosförderband sowie die Wanne mit dem Abstreifer sind dann vertikal angeordnet und können aus der Wasseroberfläche hinausragen.

## Patentansprüche

1. Vorrichtung zum Umleiten von Lebewesen und Gegenständen aus einer kanalisierten Wasserströmung mit Kanalbegrenzungen (2, 3, 8), umfassend:
a) Eine Bypassleitung (4) zur Aufnahme eines Teils der Wasserströmung, sowie
b) Mindestens ein Endlosförderband (11) mit jeweils mindestens zwei endseitigen Umlenkrollen (9, 10), wobei die Förderbänder von der Wasserströmung durchströmbar sind, dabei quer, aber nicht senkrecht zur Wasserströmung so angeordnet sind, dass sie mit den Kanalbegrenzungen eine trichterförmige Struktur (14) mit der Bypassleitung als Ausfluss bilden, sowie die Endlosförderbänder zwischen den Umlenkrollen Bewegungsrichtungen aufweisen, welche nicht senkrecht zur Wasserströmung verlaufen.

2. Vorrichtung nach Anspruch 1, wobei jedes Förderband (11) eine Umlenkrolle (9) im Bereich des Ausflusses aufweist, wobei das Endlosförderband in diesem Bereich zwischen der Umlenkrolle und einem Abstreifer (17) hindurchgeführt wird.

3. Vorrichtung nach Anspruch 1 oder 2, wobei Strömungsbarrieren (18, 19) an den Kanalbegrenzungen (2, 3) vorgesehen sind, welche sich aus Vorsprüngen an den Kanalbegrenzungen parallel zu dem Endlosförderband (11) zu einem Labyrinthdichtungssystem zusammensetzen.

4. Vorrichtung nach Anspruch 3, wobei die Vorsprünge je eine dem Endlosförderband (11) entgegen der Wasserströmung vorgeschaltete Leiste (18), Blechstreifen oder Winkelblech (19) sind, welche die Randbereiche des Endlosförderbandes überdecken.

5. Vorrichtung nach einem der vorangegangenen Ansprüche, wobei die Bypassleitung (4) eine Durchflussregulierungseinrichtung aufweist.

6. Vorrichtung nach einem der vorangegangenen Ansprüche, wobei motorische Antriebe zum Antreiben der Endlosförderbänder (11) vorgesehen sind.

7. Vorrichtung nach Anspruch 6, wobei eine Steuerung für die Antriebe sowie an die Steuerung angeschlossene Druckmessvorrichtungen in der Wasserströmung vor und hinter den Endlosförderbändern (11) zur Ermittlung eines Differenzdruckes vorgesehen sind.

8. Vorrichtung nach Anspruch 7, wobei die Steuerung Sensoren zur Erkennung einer Betriebsstörung sowie eine Schaltung für eine Reaktion auf diese Betriebsstörung umfasst.

9. Vorrichtung nach Anspruch 8, wobei die Schaltung mit Mitteln zur Unterbrechung der Wasserströmung verbunden ist.

10. Vorrichtung nach einem der vorangegangenen Ansprüche, wobei eine Reinigungsvorrichtung für das Endlosförderband vorgesehen ist.

11. Vorrichtung nach einem der vorangegangenen Ansprüche, wobei die Bypassleitung (4) an einer Kanalbegrenzung angeordnet ist.

12. Vorrichtung nach Anspruch 11, wobei die kanalisierte Strömung ein offenes, fließendes Gewässer mit einer Wasseroberfläche (8) ist, die Wasseroberfläche (8) die Kanalbegrenzung ist, an der die Bypassleitung (4) angeordnet ist.

13. Vorrichtung nach Anspruch 12, wobei das Förderband vollständig vom fließenden Gewässer eingeschlossen ist.
